# EUROPÄISCHE PATENTSCHRIFT

(11) **EP 3 116 167 B1**
(45) Veröffentlichungstag und Bekanntmachung des Hinweises auf die Patenterteilung: **09.09.2020**
(21) Anmeldenummer: 16175168.0
(22) Anmeldetag: 20.06.2016
(51) Int. Cl.: H04L 12/28

(54) **RAUMSTEUERUNG MITTELS SMARTPHONE-SENSOREN**
ROOM CONTROL USING SMART PHONE SENSORS
CONTRÔLE DE PIÈCE À L'AIDE DE CAPTEURS D'UN SMARTPHONE

(30) Priorität: 07.07.2015 DE 102015212638
(43) Veröffentlichungstag der Anmeldung: 11.01.2017
(73) Patentinhaber: Siemens Schweiz AG, 8047 Zürich (CH)
(72) Erfinder: Bodensteiner, Andreas, 92648 Vohenstrauß (DE); Schiekofer, Thomas, 93107 Wolkering (DE)
(74) Vertreter: Maier, Daniel Oliver

(56) Entgegenhaltungen:
- DE-B3-102014 201 468
- DE-U1-202013 004 553
- US-A1- 2012 031 984
- US-A1- 2013 285 837

## Beschreibung

Die Erfindung betrifft ein mobiles Kommunikationsendgerät, eine Anordnung, und ein Verfahren zur ortsabhängigen Steuerung von Komfortgrössen eines Raumes.

Es ist bekannt, dass Funktionen der Haus- oder Gebäudesteuerung über ein tragbares mobiles Kommunikationsendgerät (z.B. Smartphone oder Tablet-Computer) eines Benutzers durchführbar sind. So ist es z.B. bekannt, dass ein Benutzer mit einem Smartphone oder Tablet-Computer (mit entsprechender Software) die Beleuchtung, die Jalousien oder die Temperatur in einem Gebäude steuern kann.

Die Patentanmeldung US2013/0285837A1 offenbart eine Kommunikationsmethode und ein entsprechend eingerichtetes mobiles Kommunikationsgerät zum entfernten Zugriff eines externen Gerätes auf elektrische Geräte (elektrical home appliances) bzw. auf Sensoren in einem Gebäude über das mobile Kommunikationsgerät, wobei der Zugriff auf das mobile Kommunikationsgerät über ein öffentliches Kommunikationsnetzwerk (public network communication) erfolgt.

Die deutsche Patentschrift DE102014201468B3 offenbart eine Anordnung und Verfahren zur zeitlich und/oder örtlich begrenzten Steuerung von Komfortgrössen eines Raumes über ein mobiles Gerät eines Benutzers, z. B. Smartphone oder Tablet-Computer, wobei das mobile Gerät nicht zur Infrastruktur des Raumes gehört, sondern sich im Eigentum bzw. Besitz des Benutzers befindet.

Ein mobiles Gerät (z.B. Smartphone) mit Webbrowser kann auch Funktionen in einem Gebäudeautomatisierungssystem über einen Web-Server und WLAN bedienen, z.B. der IP Viewer N 151 der Firma Siemens. Der Zugriffsschutz erfolgt hierbei über Benutzername und Passwort. Die Zugangsdaten wie URL, Benutzername und Passwort müssen einem Benutzer bekannt sein. Dieses Zugangsverfahren ist aufwändig und unflexibel. Ausserdem wird eine auf den jeweiligen Benutzer abgestimmte Steuerung von Komfortgrössen nur unzureichend unterstützt.

Es ist daher die Aufgabe der vorliegenden Erfindung, eine einfache und auf einen Benutzer abgestimmte Regelung einer Komfortgrösse bereitzustellen.

Die Aufgabe wird gelöst durch ein mobiles Kommunikationsendgerät (z.B. Smartphone) zur ortsabhängigen Steuerung von Komfortgrössen eines Raumes, das mobile Kommunikationsendgerät umfassend:
eine Sensorik zum Erfassen des Wertes mindestens einer Komfortgrösse;
eine Empfangsvorrichtung zum Empfangen von Istwerten von Aktoren zur Einstellung der mindestens einen Komfortgrösse;
eine Ausgabevorrichtung zur Ausgabe des Wertes der mindestens einen Komfortgrösse und der Istwerte der Aktoren;
eine Eingabevorrichtung zum Ansteuern der Aktoren, wobei das Ansteuern der Aktoren über eine Nahfeldkommunikation (NFC) zwischen dem mobilen Kommunikationsendgerät und einer für den Raum zuständigen Gebäudesteuerung (z.B. KNX-Bussystem) erfolgt, und
eine Schnittstelle zum Anschluss einer externen Sensorik, wobei das mobile Kommunikationsendgerät dazu ausgelegt ist, die externe an das mobile Kommunikationsendgerät angebundene Sensorik zur Regelung der Komfortgrößen zu verwenden. Für die Regelung der Komfortgrösse (z.B. Temperatur) werden die Sensoren eines Smartphone, Tablet-PC's oder anderen mobilen Endgerätes verwendet. Dies können beispielweise im Gerät integrierte Sensoren für Helligkeit, Farbtemperatur, Temperatur, Luftfeuchte sein. Diese "Wohlfühlparameter" werden durch die Sensoren des mobilen Gerätes sehr nahe beim Benutzer erfasst und für die Regelung verwendet. Dadurch kann eine sehr gut auf den Benutzer abgestimmte Regelung erfolgen. Durch eine Kommunikation mit einem Smartphone oder Tablet-PC mit sehr kurzer Reichweite (z.B. NFC, insbesondere Bluetooth 4.0) besteht die Möglichkeit, eine Authentifizierung entfallen zu lassen, da eine Steuerung nur in unmittelbarer Umgebung durchgeführt werden kann. Somit ist sehr einfach eine ortsabhängige Steuerung bzw. Visualisierung der Komfortgrössen des Raumes (R) und/oder für eine ortsabhängige Visualisierung möglich. Eine örtlich auf den Raum begrenzte Kommunikation mit einem Steuergerät eines Gebäudeautomatisierungssystems (z.B. KNX-Bussystem) ermöglicht einen Verzicht auf Authentifizierungsmechanismen zur Steuerung der Aktoren. Vorteilhafterweise erfolgt die Raumsteuerung mittels Smartphone-Sensoren über ein KNX-NFC-Gateway.

Eine weitere vorteilhafte Ausgestaltung der Erfindung liegt darin, dass das Kommunikationsendgerät ein Steuerprogramm zur Ansteuerung der Aktoren umfasst, wobei das Steuerprogramm vom Internet auf das Kommunikationsendgerät herunterladbar ist und insbesondere eine auf die Infrastruktur des Raumes abgestimmte Benutzeroberfläche bereitstellt. Die Bereitstellung einer auf die Infrastruktur des jeweiligen Raumes abgestimmten Benutzeroberfläche ermöglicht eine kontextsensitive Benutzerschnittstelle hinsichtlich der im jeweiligen Raum möglichen Steuerfunktionalität bezüglich der Komfortgrössen. So kann die Benutzerschnittstelle eine auf den jeweiligen Raum bezogene ortsabhängige Ikonisierung aufweisen. So können z.B. entsprechende Bedienelemente zur Steuerung der jeweiligen Komfortgrössen dargestellt werden. Prinzipiell kann die Benutzeroberfläche auch nur zur Visualisierung des Raumes (z.B. auch ohne Steuerfunktion) verwendet werden. Bedienelemente für Steuerfunktionen können z.B. ein-/ausgeblendet werden. Die Darstellung der Anzeige- und Bedienelemente in der App kann z.B. auf Basis eines Raumgrundrisses und/oder als Liste erfolgen.

Eine weitere vorteilhafte Ausgestaltung der Erfindung liegt darin, dass das mobile Kommunikationsendgerät eine Regelvorrichtung umfasst, für eine Regelung der Aktoren hinsichtlich eines, auf dem Kommunikationsendgerät gespeicherten, vordefinierten Profils der mindestens einen Komfortgrösse. Somit ist für den jeweiligen Benutzer eine individualisierte Regelung hinsichtlich einer oder mehrerer Komfortgrössen möglich, die (ohne weitere erforderliche Einstellungen) auf Knopfdruck aktivierbar ist.

Eine weitere vorteilhafte Ausgestaltung der Erfindung liegt darin, dass es sich beim Kommunikationsendgerät um ein Smartphone, eine Smartwatch, ein Notebook, oder um einen Tabletcomputer handelt. Somit kann ein entsprechend ausgestattetes (insbesondere mit Mittel zur Einrichtung einer NFC-Verbindung) mobiles Gerät eines Benutzers zur Steuerung der Komfortgrösse verwendet werden.

Die Aufgabe wird weiterhin gelöst durch eine Anordnung zur ortsabhängigen Steuerung von Komfortgrössen eines Raumes, die Anordnung umfassend:
- ein im Raum angebrachtes Steuergerät eines Gebäudeautomatisierungssystems zur Steuerung einer, die Komfortgrössen des Raumes beeinflussbaren Aktorik, wobei das Steuergerät dazu eingerichtet ist, über eine Nahfeldkommunikation Steuersignale von einem entsprechend ausgebildeten mobilen Kommunikationsendgerät zu empfangen; und
- ein erfindungsgemässes mobiles Kommunikationsendgerät. Die Anordnung lässt sich mit heutzutage sowieso vorhandener Infrastruktur im Gebäude und auf Benutzerseite realisieren.
Eine weitere vorteilhafte Ausgestaltung der Erfindung liegt darin, dass es sich beim Gebäudeautomatisierungssystem um ein KNX-Bussystem handelt. Elektroinstallationen in Gebäuden werden in immer größerem Umfang unter Verwendung von Bustechnik verwirklicht. Eines dieser Bussysteme ist der Konnex- bzw. KNX-Bus, der zur Herstellung einer Verbindung zwischen den in dem Gebäude installierten Elektrogeräten, wie z.B. Licht, Jalousien, Ventilatoren, Heizung, Alarmanlage oder dergleichen sowie Bedienungselementen, wie z.B. Taster, Schalter, Dimmer oder dergleichen dient. Dieses Bussystem basiert darauf, dass jeder Busteilnehmer über einen eigenen Mikroprozessor verfügt und somit selbständig und unabhängig von einem zentralen Prozessor seine Daten verwaltet. Jedem Busteilnehmer ist hierzu ein Applikationsprogramm mit Kommunikationsobjekten und Parametern zugeordnet. Ein im betreffenden Raum angebrachtes KNX-Steuergerät kann somit zur Steuerung der Aktoren verwendet werden.
Die Aufgabe wird weiterhin gelöst durch ein Verfahren zur ortsabhängigen Steuerung von Komfortgrössen eines Raumes durch ein mobiles Kommunikationsendgerät, das Verfahren umfassend die folgenden Schritte:
- Erfassen des Wertes der mindestens einen Komfortgrösse durch eine Sensorik des Kommunikationsendgerätes und durch eine externe an das Kommunikationsendgerät angebundene Sensorik;
- Empfangen von Istwerten von Aktoren zur Veränderung der mindestens einen Komfortgrösse durch eine Empfangsvorrichtung des Kommunikationsendgerätes;
- Darstellen des Wertes der mindestens einen Komfortgrösse und der Istwerte der Aktoren auf einer Ausgabevorrichtung des Kommunikationsendgerätes;
- Ansteuern der Aktoren über eine Nahfeldkommunikation (NFC, z.B. Bluetooth) zwischen dem mobilen Kommunikationsendgerät und einer für den Raum zuständigen Gebäudesteuerung (KNX System), wobei das mobile Kommunikationsendgerät dazu ausgelegt ist, die externe an das mobile Kommunikationsendgerät angebundene Sensorik zur Regelung der Komfortgrößen zu verwenden. Das Verfahren lässt sich durch sowieso vorhandene Infrastruktur im Gebäude bzw. beim Benutzer realisieren. Eine weitere vorteilhafte Ausgestaltung der Erfindung liegt darin, dass eine Regelung der Aktoren hinsichtlich eines, auf dem Kommunikationsendgerät gespeicherten, vordefinierten Profils der mindestens einen Komfortgrösse erfolgt. Die Regelung der Aktoren kann dabei durch eine auf dem mobilen Kommunikationsendgerät befindliche Regelvorrichtung erfolgen, die z.B. als Softwareprogramm (App) auf das Kommunikationsendgerät (z.B. Smartphone) geladen wurde. Die Software für die Regelvorrichtung kann aber auch auf einem Server in einer "cloud" laufen. Das Kommunikationsendgerät ruft den dazugehörigen Service von der "cloud" (z.B. von einem entfernten Rechenzentrum) ab und stellt ihn auf dem Kommunikationsendgerät für einen Benutzer zur Verfügung.

Die Erfindung sowie vorteilhafte Ausführungen der vorliegenden Erfindung werden am Beispiel der nachfolgenden Figuren erläutert. Dabei zeigen:
- FIG 1: eine beispielhafte Prinzipdarstellung einer Anordnung zur örtlich begrenzten Steuerung von Komfortgrössen eines Raumes über ein mobiles Kommunikationsendgerät eines Benutzers,
- FIG 2: ein beispielhaftes Ablaufdiagramm zur örtlich begrenzten Steuerung von Komfortgrössen eines Raumes über ein mobiles Kommunikationsendgerät eines Benutzers.

Um Komfortgrößen in einem Raum zu verändern gibt es bisher folgende Möglichkeiten:
- konventionelle Installation (z.B. Heizungsthermostat);
- festinstallierte Bediengeräte der elektronischen Gebäudesteuerung;
- Festlegen der Sollwertparameter durch WLAN- oder sonstige Drahtlos-Kommunikation mit Authentifizierung oder Infrarot-Kommunikation.

Durch fest im Gebäude verbaute Sensoren sind diese an einem fixen Ort gebunden. Dort werden die Istwerte der Komfortgrößen erfasst (z.B. Helligkeitssensor an der Decke, Temperatursensor an der Wand) und diese für die Regelung herangezogen. Diese Werte können von den tatsächlichen Werten je nach Entfernung mehr oder weniger weit von den realen Werten beim Anwender (d.h. in der nahen physischen Umgebung des Anwenders) abweichen. Durch eine Mehrzahl von Sensoren kann zwar die zielgerichtete Regelung verbessert werden, wodurch aber höhere Kosten entstehen.

Erfindungsgemäss soll nun die Steuerung und/oder Regelung von Komfortgrößen wie beispielsweise Helligkeit oder Temperatur durch einen festen Sollwert oder relative Sollwertverschiebung auf den Benutzer abgestimmt geregelt werden. Die Erfassung der Daten (z.B. Istwert) sowie die Änderung der Parameter (z.B. Sollwert) soll so nahe wie möglich am Benutzer erfolgen.

Für die Regelung werden die Sensoren eines Smartphone, Tablet-PC's oder von anderen mobilen Endgerätes verwendet. Dies können beispielweise im Gerät integrierte Sensoren für Helligkeit, Farbtemperatur, Temperatur, Luftfeuchte sein, aber optional auch extern an das Smartphone angebundene Sensoren wie Pulsmesser und externe Temperatursensoren. Erfindungsgemäss werden diese "Wohlfühlparameter" (Komfortgrössen) durch die Sensoren des mobilen Gerätes sehr nahe beim Benutzer erfasst und für die Regelung verwendet. Dadurch kann eine sehr gut auf den Benutzer abgestimmte Regelung erfolgen.

Durch eine Kommunikation mit sehr kurzer Reichweite (z. B. NFC) zwischen dem mobilen Kommunikationsendgerät (z. B. Smartphone oder Tablet-PC) des Benutzers und eines im Raum befindlichen Steuergerätes (z.B. KNX-Busteilnehmer zur Ansteuerung der für die Veränderung der Komfortgrösse notwendigen Aktorik) eines Gebäudeautomatisierungssystems (z.B. KNX-Bussystem)) besteht die Möglichkeit, eine Authentifizierung entfallen zu lassen, da eine Steuerung nur in unmittelbarer Umgebung durchgeführt werden kann.

Die Kommunikation zwischen dem Steuergerätes und dem mobilen Gerät des Benutzers kann z.B. über WLAN, RFID), IR (Infrarot) oder Bluetooth erfolgen. Prinzipiell ist jede Art von geeigneter Nahfeldkommunikation (Near Field Communication, NFC) möglich.

Erfindungsgemäss erfasst eine Software auf dem mobilen Endgerät die von den Sensoren gelieferten Daten. Zusätzlich werden die Istwerte der Aktoren der Gebäudesteuerung abgefragt. Anschließend werden dem Benutzer die Daten auf dem mobilen Gerät dargestellt und ihm wird die Möglichkeit gegeben, Sollwerte auf seine Bedürfnisse abzuändern. Daraufhin verwendet die Software auf einem Smartphone oder Tablet-PC im Gerät integrierte oder (optional) extern angebundene Sensoren für die Regelung. Dafür werden über die gewählte Kommunikationsart entsprechende Stellwerte an die Aktoren der Gebäudeautomatisierung gesendet.

Die vorliegende Erfindung bietet insbesondere folgende Vorteile:
Durch die Verwendung von Smartphone-Sensoren in Verbindung mit NFC kann eine benutzernahe Steuerung von Komfortgrößen erreicht werden. Durch die sehr kurze Kommunikationsreichweite kann dies auch für Besucher öffentlicher Räume ohne Authentifizierung verwendet werden. Durch die Verwendung von vorhandenen Smartphones kann auf ein kostenintensives Sensornetzwerk verzichtet werden. Die benutzernahe Messung der IstWerte sorgt für eine optimierte Regelung, damit wird der Komfort erhöht und Kosten können reduziert werden.

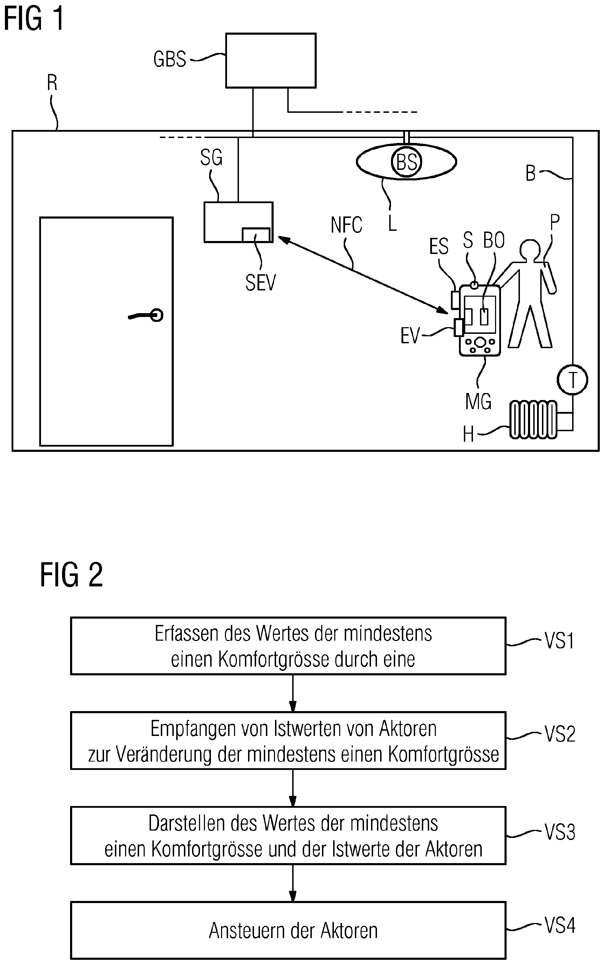

Figur 1 zeigt eine beispielhafte Prinzipdarstellung einer Anordnung zur örtlich begrenzten Steuerung von Komfortgrössen BS ,T eines Raumes R über ein mobiles Kommunikationsendgerät MG eines Benutzers P. BS (Beleuchtungsstärke) und T (Temperatur) stellen beispielhafte steuerbare Komfortgrössen dar.

Ein Steuergerät SG (z.B. KNX-Raumkontrollgerät) ist mit einem Gebäudeautomatisierungssystem GBS (z.B. KNX) verbunden und kann die Steuerung der Aktoren für Beleuchtung L und Temperatur H im Raum R durchführen. Durch die gestrichelte Linie in Figur 1 ist angedeutet, dass das Gebäudeautomatisierungssystem GBS mit weiteren Raumkontrollgeräten verbunden sein kann, z.B. über geeignete Busverbindungen.

Durch eine drahtlose Nahfeldkommunikation (zum Beispiel Bluetooth, NFC, RF, Infrarot) kann eine Verbindung zwischen einem mobilen Benutzerendgerät MG (vorzugsweise Smartphone mit entsprechender Applikation für Android, iOS,...) und dem Steuergerät SG (z.B KNX-Raumkontrollgerät) aufgebaut werden. Durch das Raumkontrollgerät SG können die mobilen Endgeräte MG die oben genannte Steuerung der Aktoren (z.B. Lampen L, Heizung H) im Raum R durchführen.

Mit Vorteil ist das Steuergerät SG (Raumkontrollgerät) über eine Busverbindung B mit dem Gebäudeautomatisierungssystem GBS und den zu steuernden Aktoren L, H verbunden. In der Darstellung gemäss Figur 1 sind als beispielhafte Aktoren eine Beleuchtung L und eine Heizung H dargestellt.

Mit Vorteil umfasst die Sende-Empfangsvorrichtung SEV des Steuergerätes SG einen geeigneten Funkempfänger (z.B. Bluetooth), der wiederholt die Anwesenheit von mobilen Funkempfängern (z.B. Smartphones) MG erkennt. Mit Vorteil weist die als Funkempfänger ausgebildete Sende-Empfangsvorrichtung SEV erkannte mobile Funkempfänger (Kommunikationsendgeräte) MG darauf hin, dass für einen Benutzer P die Möglichkeit besteht, über sein Kommunikationsendgerät MG Komfortgrössen im Raum R zu verändern. Dies kann z.B. durch eine SMS erfolgen.

Mit Vorteil umfasst das Steuergerät SG eine Sende-/Empfangsvorrichtung SEV zur Nahfeldkommunikation (NFC) mit einer entsprechend ausgebildeten Empfangsvorrichtung EV des mobilen Gerätes MG. Die Kommunikation zwischen dem Steuergerät SG und dem mobilen Kommunikationsendgerät MG eines Benutzers P kann z.B. über RFID (Radio Frequency Identification) oder Bluetooth erfolgen. Die Kommunikation zwischen dem Steuergerät SG und dem mobilen Gerät MG kann prinzipiell aber auch über IR (Infrarot-Verbindung) oder WLAN erfolgen.

Durch die Verwendung einer Nahfeldkommunikation (NFC) kann auf eine Authentifizierung bzw. Autorisierung zwischen Steuergerät SG und dem mobilen Kommunikationsendgerät MG verzichtet werden.

Weiterhin umfasst die Anordnung ein mobiles Kommunikationsendgerät MG, geeignet zur örtlich begrenzten Nahfeldkommunikation mit dem Steuergerät SG.

Das mobile Kommunikationsendgerät MG muss nicht zur Infrastruktur (Ausrüstung) des Raumes R gehören. Mit Vorteil handelt es sich beim mobilen Kommunikationsendgerät MG um ein Gerät (z.B. Smartphone, Tablet-Computer) eines Benutzers P.

Eine Steuerung der Komfortgrössen ist nur möglich, wenn sich das mobile Kommunikationsendgerät MG im Raum R befindet, d.h. es wird durch das Steuergerät SG permanent überprüft, ob sich ein aktiviertes mobiles Kommunikationsendgerät MG noch im Raum R befindet (z.B. durch Überprüfen, ob eine NFC-Verbindung zwischen Steuergerät SG und aktiviertem mobilen Gerät MG noch existiert.

Eine vorteilhafte Ausgestaltung der Erfindung liegt darin, dass das mobile Kommunikationsendgerät MG ein Steuerprogramm (App) zur Steuerung der Raumkomfortgrössen BS (Beleuchtungsstärke) und T (Temperatur) umfasst und eine auf die Steuerung der dazugehörigen Aktorik zur Veränderung der Komfortgrössen abgestimmte Benutzeroberfläche BO bereitstellt.

Die Benutzeroberfläche BO kann z.B. als Applikation (App) auf dem mobilen Kommunikationsendgerät MG erfolgen. Die Applikation (App) kann z.B. durch einen Download vom Internet auf das Kommunikationsendgerät MG geladen werden. Die Darstellung der Anzeige- und Bedienelemente in der App kann auf Basis eines Raumgrundrisses und/oder als Liste erfolgen.

Die Bereitstellung einer auf die Infrastruktur des jeweiligen Raumes R abgestimmten Benutzeroberfläche BO ermöglicht eine kontextsensitive Benutzerschnittstelle BO hinsichtlich der im jeweiligen Raum R möglichen Steuerfunktionalität bezüglich der Komfortgrössen (Temperatur, Licht etc.). So kann die Benutzerschnittstelle BO eine auf den jeweiligen Raum R bezogene adäquate ortsabhängige Ikonisierung (Symbole, adäquate Bedienelemente, etc.) aufweisen. So können z.B. entsprechende Bedienelemente zur Steuerung der Aktorik für die jeweiligen Komfortgrössen dargestellt werden.

Figur 2 zeigt ein beispielhaftes Ablaufdiagramm für ein Verfahren zur örtlich begrenzten Steuerung von Komfortgrössen eines Raumes über ein mobiles Kommunikationsendgerät eines Benutzers.

Das Verfahren umfasst die folgenden Schritte:
- (VS1) Erfassen des Wertes der mindestens einen Komfortgrösse durch eine Sensorik des Kommunikationsendgerätes;
- (VS2) Empfangen von Istwerten von Aktoren zur Veränderung der mindestens einen Komfortgrösse durch eine Empfangsvorrichtung des Kommunikationsendgerätes;
- (VS3) Darstellen des Wertes der mindestens einen Komfortgrösse und der Istwerte der Aktoren auf einer Ausgabevorrichtung des Kommunikationsendgerätes;
- (VS4) Ansteuern der Aktoren über eine Nahfeldkommunikation (NFC; z.B. Bluetooth) zwischen dem mobilen Kommunikationsendgerät und einer für den Raum zuständigen Gebäudesteuerung.

Optional erfolgt eine Regelung der Aktoren hinsichtlich eines, auf dem mobilen Kommunikationsendgerät gespeicherten, vordefinierten Profils der mindestens einen Komfortgrösse (z.B. Temperatur oder Beleuchtungsstärke).

Das Verfahren basiert insbesondere auf der Interaktion von Steuergerät und mobilen Gerät (z.B. Smartphone) eines Benutzers auf Basis üblicherweise vorhandenen Near Field Kommunikationsmechanismen (NFC, Bluetooth etc.). Das Steuergerät enthält üblicherweise einen Mikroprozessor und ist mit einem Gebäudeautomatisierungssystem (z.B. KNX) verbunden, um die vom mobilen Kommunikationsendgerät empfangenen Steuerdaten an die entsprechende Aktuatorik (Aktorik) zur Ansteuerung der Komfortgrössen (Temperatur, Licht, etc.) weiterzuleiten. Dies erfolgt über geeignete Busverbindungen (drahtgebunden oder drahtlos (z.B. Funk)).

Anordnung und Verfahren zur ortsabhängigen Steuerung von Komfortgrössen eines Raumes durch ein mobiles Kommunikationsendgerät (z.B. Smartphone), wobei der Wert der Komfortgrösse durch eine Sensorik des Kommunikationsendgerätes erfasst wird; und wobei der Istwert von Aktoren (zur Einstellung bzw. Veränderung der der Komfortgrösse) am Kommunikationsendgerät darstellbar ist; und durch ein Ansteuern der Aktoren über eine Nahfeldkommunikation (Z.B. Bluetooth, RF) zwischen dem mobilen Kommunikationsendgerät und einer für den Raum zuständigen Gebäudesteuerung (z.B. KNX-System) die entsprechenden Aktoren einstellbar sind. Vorteilhafterweise erfolgt die Raumsteuerung mittels Smartphone-Sensoren über ein KNX-NFC-Gateway.

## Patentansprüche

1. Mobiles Kommunikationsendgerät (MG) zur ortsabhängigen Steuerung von Komfortgrössen eines Raumes (R), das mobile Kommunikationsendgerät (MG) umfassend:
eine Sensorik (S) zum Erfassen des Wertes mindestens einer Komfortgrösse (BS,T);
eine Empfangsvorrichtung (EV) zum Empfangen von Istwerten von Aktoren (L,H) zur Einstellung der mindestens einen Komfortgrösse (BS,T);
eine Ausgabevorrichtung (BO) zur Ausgabe des Wertes der mindestens einen Komfortgrösse (BS,T) und der Istwerte der Aktoren (L,H);
eine Eingabevorrichtung (BO) zum Ansteuern der Aktoren (L,H), wobei das Ansteuern der Aktoren (L,H) über eine Nahfeldkommunikation (NFC) zwischen dem mobilen Kommunikationsendgerät (MG) und einer für den Raum zuständigen Gebäudesteuerung (GBS) erfolgt; und
eine Schnittstelle (ES) zum Anschluss einer externen Sensorik, **dadurch gekennzeichnet, dass** das mobile Kommunikationsendgerät (MG) dazu ausgelegt ist, die externe an das mobile Kommunikationsendgerät (MG) angebundene Sensorik zur Regelung der Komfortgrößen zu verwenden.

2. Mobiles Kommunikationsendgerät (MG) nach Anspruch 1, wobei das Kommunikationsendgerät (MG) ein Steuerprogramm (App) zur Ansteuerung der Aktoren (L,H) umfasst, wobei das Steuerprogramm (App) vom Internet auf das Kommunikationsendgerät herunterladbar ist und insbesondere eine auf die Infrastruktur des Raumes (R) abgestimmte Benutzeroberfläche (BO) bereitstellt.

3. Mobiles Kommunikationsendgerät (MG) nach einem der vorstehenden Ansprüche, wobei das mobile Kommunikationsendgerät (MG) eine Regelvorrichtung umfasst, für eine Regelung der Aktoren (L,H) hinsichtlich eines, auf dem Kommunikationsendgerät (MG) gespeicherten, vordefinierten Profils der mindestens einen Komfortgrösse (BS,T).

4. Mobiles Kommunikationsendgerät (MG) nach einem der vorstehenden Ansprüche, wobei es sich beim Kommunikationsendgerät (MG) um ein Smartphone, eine Smartwatch, ein Notebook, oder um einen Tabletcomputer handelt.

5. Anordnung zur ortsabhängigen Steuerung von Komfortgrössen (BS,T) eines Raumes (R), die Anordnung umfassend:
ein im Raum (R) angebrachtes Steuergerät (SG) eines Gebäudeautomatisierungssystems (GBS) zur Steuerung einer, die Komfortgrössen des Raumes (R) beeinflussbaren Aktorik (L,H), wobei das Steuergerät (SG) dazu eingerichtet ist, über eine Nahfeldkommunikation (NFC) Steuersignale von einem mobilen Kommunikationsendgerät (MG) zu empfangen;
ein mobiles Kommunikationsendgerät (MG) nach einem der Ansprüche 1 bis 4.

6. Anordnung nach Anspruch 5, wobei es sich beim Gebäudeautomatisierungssystem (GBS) um ein KNX-Bussystem handelt.

7. Verfahren zur ortsabhängigen Steuerung von Komfortgrössen (BS,T) eines Raumes (R) durch ein mobiles Kommunikationsendgerät (MG), das Verfahren umfassend die folgenden Schritte:
(VS1) Erfassen des Wertes der mindestens einen Komfortgrösse (BS,T) durch eine Sensorik (S) des Kommunikationsendgerätes (MG) und durch eine externe an das Kommunikationsendgerät (MG) angebundene Sensorik;
(VS2) Empfangen von Istwerten von Aktoren (L,H) zur Veränderung der mindestens einen Komfortgrösse (BS,T) durch eine Empfangsvorrichtung (EV) des Kommunikationsendgerätes (MG);
(VS3) Darstellen des Wertes der mindestens einen Komfortgrösse (BS,T) und der Istwerte der Aktoren (L,H) auf einer Ausgabevorrichtung (BO) des Kommunikationsendgerätes (MG) ;
(VS4) Ansteuern der Aktoren (L,H) über eine Nahfeldkommunikation (NFC) zwischen dem mobilen Kommunikationsendgerät (MG) und einer für den Raum (R) zuständigen Gebäudesteuerung (GBS), **dadurch gekennzeichnet, dass** das mobile Kommunikationsendgerät (MG) dazu ausgelegt ist, die externe an das mobile Kommunikationsendgerät (MG) angebundene Sensorik zur Regelung der Komfortgrößen zu verwenden.

8. Verfahren nach Anspruch 7, wobei eine Regelung der Aktoren (L,H) hinsichtlich eines, auf dem Kommunikationsendgerät (MG) gespeicherten, vordefinierten Profils der mindestens einen Komfortgrösse (BS,T) erfolgt.

## Claims

1. Mobile communication terminal (MG) for the location-dependent controlling of comfort variables of a room (R), the mobile communication terminal (MG) comprising:
a sensor system (S) for capturing the value of at least one comfort variable (BS,T);
a receiving device (EV) for receiving actual values of actuators (L,H) for adjusting the at least one comfort variable (BS,T);
an output device (BO) for outputting the value of the at least one comfort variable (BS,T) and the actual values of the actuators (L,H);
an input device (BO) for actuating the actuators (L,H), wherein the actuating of the actuators (L,H) takes place by way of a near field communication (NFC) between the mobile communication terminal (MG) and a building controller (GBS) responsible for the room; and
an interface (ES) for connecting to an external sensor system, **characterised in that**
the mobile communication terminal (MG) is designed to use the external sensor system linked to the mobile communication terminal (MG) to regulate the comfort variables.

2. Mobile communication terminal (MG) according to claim 1, wherein the communication terminal (MG) comprises a control program (app) for actuating the actuators (L,H), wherein the control program (app) can be downloaded from the Internet onto the communication terminal and in particular provides a user interface (BO) matched to the infrastructure of the room (R).

3. Mobile communication terminal (MG) according to one of the preceding claims, wherein the mobile communication terminal (MG) comprises a regulation device for regulating the actuators (L,H) with regard to a predefined profile, which is stored on the communication terminal (MG), of the at least one comfort variable (BS,T).

4. Mobile communication terminal (MG) according to one of the preceding claims, wherein the communication terminal (MG) is a smartphone, a smartwatch, a notebook computer or a tablet computer.

5. Arrangement for the location-dependent controlling of comfort variables (BS,T) of a room (R), the arrangement comprising:
a control device (SG), mounted in the room (R), of a building automation system (GBS) for controlling an actuator system (L,H) which can influence the comfort variables of the room (R), wherein the control device (SG) is configured to receive control signals from a mobile communication terminal (MG) by way of a near field communication (NFC);
a mobile communication terminal (MG) according to one of claims 1 to 4.

6. Arrangement according to claim 5, wherein the building automation system (GBS) is a KNX bus system.

7. Method for the location-dependent controlling of comfort variables (BS,T) of a room (R) by way of a mobile communication terminal (MG), the method comprising the following steps:
(VS1) capturing the value of the at least one comfort variable (BS,T) by way of a sensory system (S) of the communication terminal (MG) and by way of an external sensor system linked to the communication terminal (MG);
(VS2) receiving actual values of actuators (L,H) for varying the at least one comfort variable (BS,T) by way of a receiving device (EV) of the communication terminal (MG);
(VS3) representing the value of the at least one comfort variable (BS,T) and the actual values of the actuators (L,H) on a display device (BO) of the communication terminal (MG);
(VS4) actuating the actuators (L,H) by way of a near field communication (NFC) between the mobile communication terminal (MG) and a building controller (GBS) responsible for the room (R), **characterised in that**
the mobile communication terminal (MG) is designed to use the external sensor system linked to the mobile communication terminal (MG) to regulate the comfort variables.

8. Method according to claim 7, wherein the actuators (L,H) are regulated with regard to a predefined profile, which is stored on the communication terminal (MG), of the at least one comfort variable (BS,T).

## Revendications

1. Terminal de communication mobile (MG) pour la commande, en fonction du lieu, de grandeurs de confort d'un espace (R), le terminal de communication mobile (MG) comprenant :
des capteurs (S) pour capter la valeur d'au moins une grandeur de confort (BS,T) ;
un dispositif de réception (EV) pour recevoir des valeurs réelles d'actionneurs (L,H) pour le paramétrage de l'au moins une grandeur de confort (BS,T) ;
un dispositif de sortie (BO) pour produire en sortie la valeur de l'au moins une grandeur de confort (BS,T) et les valeurs réelles des actionneurs (L,H) ;
un dispositif d'entrée (BO) pour commander les actionneurs (L,H), la commande des actionneurs (L,H) se faisant via une communication en champ proche (NFC) entre le terminal de communication mobile (MG) et une commande de bâtiment (GBS) compétente pour l'espace ; et
une interface (ES) pour raccorder des capteurs externes,
**caractérisé en ce que**
le terminal de communication mobile (MG) est conçu pour utiliser les capteurs externes reliés au terminal de communication mobile (MG) pour régler les grandeurs de confort.

2. Terminal de communication mobile (MG) selon la revendication 1, dans lequel le terminal de communication (MG) comprend un programme de commande (App) pour commander les actionneurs (L,H), le programme de commande (App) pouvant être chargé d'Internet sur le terminal de communication et fournissant plus particulièrement une surface utilisateur (BO) adaptée à l'infrastructure de l'espace (R).

3. Terminal de communication mobile (MG) selon l'une des revendications précédentes, dans lequel le terminal de communication mobile (MG) comprend un dispositif de réglage pour un réglage des actionneurs (L,H) par rapport à un profil de l'au moins une grandeur de confort (BS,T) prédéfini, sauvegardé sur le terminal de communication (MG).

4. Terminal de communication mobile (MG) selon l'une des revendications précédentes, dans lequel le terminal de communication (MG) est un smartphone, une smartwatch, un ordinateur portable ou une tablette tactile.

5. Ensemble pour la commande de grandeurs de confort (BS,T) d'un espace (R) en fonction du lieu, l'ensemble comprenant :
un appareil de commande (SG) d'un système d'automatisation de bâtiment (GBS), monté dans l'espace (R), pour la commande d'actionneurs (L,H) influençant les grandeurs de confort de l'espace (R), l'appareil de commande (SG) étant configuré pour recevoir, via une communication en champ proche (NFC),
des signaux de commande d'un terminal de communication mobile (MG) ;
un terminal de communication mobile (MG) selon l'une des revendications 1 à 4.

6. Ensemble selon la revendication 5, dans lequel le système d'automatisation de bâtiment (GBS) est un système de bus KNX.

7. Procédé de commande de grandeurs de confort (BS,T) d'un espace (R) en fonction du lieu par un terminal de communication mobile (MG), le procédé comprenant les étapes suivantes :
(VS1) acquisition de la valeur de l'au moins une grandeur de confort (BS,T) par des capteurs (S) du terminal de communication (MG) et par des capteurs externes reliés au terminal de communication (MG) ;
(VS2) réception de valeurs réelles d'actionneurs (L,H) pour modifier l'au moins une grandeur de confort (BS,T) par un dispositif de réception (EV) du terminal de communication (MG) ;
(VS3) représentation de la valeur de l'au moins une grandeur de confort (BS,T) et des valeurs réelles des actionneurs (L,H) sur un dispositif de sortie (BO) du terminal de communication (MG) ;
(VS4) commande des actionneurs (L,H) via une communication en champ proche (NFC) entre le terminal de communication mobile (MG) et une commande de bâtiment (GBS) compétente pour l'espace (R),
**caractérisé en ce que**
le terminal de communication mobile (MG) est conçu pour utiliser les capteurs externes reliés au terminal de communication mobile (MG) pour régler les grandeurs de confort.

8. Procédé selon la revendication 7, dans lequel un réglage des actionneurs (L,H) se fait par rapport à un profil de l'au moins une grandeur de confort (BS,T) prédéfini, sauvegardé sur le terminal de communication (MG).
